# EUROPEAN PATENT APPLICATION

(11) **EP 2 345 949 A2**
(43) Date of publication of application: **20.07.2011**
(21) Application number: 10159410.9
(22) Date of filing: 08.04.2010
(51) Int. Cl.: G06F 1/18

(54) **A waterproof casing with multiple isolated compartments**

(30) Priority: 18.01.2010 TW 099200967
(71) Applicant: CReTE Systems Inc., Taipei County (TW)
(72) Inventor: Lu, Chia-Hung, Taipei County (TW); Yao, Chih-Teng, Taipei County (TW)
(74) Representative: Lang, Christian

(57) **Abstract**

A structure of compartmental waterproof casing comprises a mother board and a casing body with multiple compartments. The compartments are closed and sealed in order to prevent moisture or other foreign substance from entering the casing body. Therefore the device installed inside the casing body is waterproof and protected against other damaging substance.

## Description

### BACKGROUND OF THE INVENTION

### 1. Field of the invention

The present invention relates to a structure of waterproof casing with multiple isolated compartments, especially a casing capable of stopping water and other foreign substance from flowing inside the casing and causing damages.

### 2. Brief Description of the Prior Art

Using computer becomes a trend when time enters twenty first century. Computer suppliers are competing against each other to introduce new products and to replace old technologies with new ones continuously. People's knowledge on computes grows, too. The chance for people of all age and genders to touch and use computers increases tremendously in today's society. Consumers especially welcome notebook computers since their introduction because they are convenient to use anywhere anytime.

A computer comprises a mother board and other basic components. The mother board is stuffed with a necessary chip set. All these components are enclosed together by a stylish casing. A person who is overwhelmed by a computer's appearance ignores easily its weak internal structure. In addition, the computer casing has a plurality of input and/or output ports, on which there is no water sealing material or component like silicone caulking or O-ring. Therefore water can invade the computer casing easily. The risk to get damaged is relatively high and the added value of long term protection is unreachable. For end users' peace of mind while taking advantage of computer's convenience and mobility, the structure of computer needs to be enhanced to prevent external moisture or other foreign substance from damaging its internal components.

In the big environment of information explosion, there is not yet an effective waterproof method for long term protection of the weak interior of computers regardless how fast computer systems were upgraded and how much their mobility were improved. Partially because of the complexity of computer casings internal structure layout and partially because of the difficulty to isolate individual important sub-assembly itself for waterproof purpose due to limited fund or technology, it is more practical to efficiently stop damaging substance from external environment by some special manufacturing method of the casing itself. For example, many sub-assemblies of a computer can be damaged easily if water enters its casing body. If we cannot perfectly prevent external damaging substance from entering computers, we need to do something to keep the damages to their minimum.

Especially for military applications, the external environmental elements like water, dust, installation on soil ground, etc. can easily contaminate internal sub-assemblies of military computers because of military mobility and increased outdoor usage. According to the prior art technology, all important components inside the computer casing like hard disk drive, optical disk drive, power supply, etc. are installed in close proximity to each other in the same space. All these components inside the casing could be damaged by water or other foreign substance that entered the casing body. It is urgent to properly correct this deficiency to improve computer's waterproof performance by focusing on the issue and analyzing the pros and cons.

For the above reasons, the inventor of the present invention understood the deficiency of prior computer casings and tried to find out what the problem is based on his years of experience working on this business. Finally he presents a set of innovative practical methods after detailed design and careful evaluation. The manufacturing process according to these methods is simple, low cost, and very much matching the usability and reconstructing ability of the industry. It extends computer's life duration by protecting the important components inside the casing. It is a green technology because the scraps will be reduced by extending computer's life duration.

### SUMMARY OF THE INVENTION

One purpose of the present invention is to present a structure of compartmental waterproof casing. It has a casing body consisting of multiple compartments. Each and every compartment comprises a closed and sealed space. At least one electronic device is installed inside said compartments. By the special character that each and every compartment comprising a closed and sealed space, water and other foreign substance are prevented to enter said compartments and damages to said electronic devices installed inside said casing body are reduced.

Another purpose of the present invention is to provide a structure of compartmental waterproof casing that the structure of compartmental waterproof casing and the multiple compartment walls built inside is formed from a single body. The manufacturing cost is relatively low because the manufacturing process is very easy, which has advantage in usability and competition in the industry.

The present invention is about a structure of compartmental waterproof casing with waterproof ability. The structure of compartmental waterproof casing comprises a casing body. The casing body comprises multiple isolated compartments, which include a hard disk drive compartment, an optical disk drive compartment and an input/output ports compartment. Some corresponding electronic components are installed inside each and every compartment. A mother board is installed inside the casing body. The mother board is connected to the electronic components in each and every individual compartment through an opening in the dividing wall. Waterproof silicone caulking is applied to the opening on the dividing wall to fill up the gap at connections completely. A casing cover is installed over the casing body exterior that the multiple compartments inside the casing are sealed completely and individually. Therefore water and other foreign substance are prevented to move arbitrarily inside the casing body so that large scale damage to electronic components can be avoided. In addition, the structure of the casing body itself is not assembled. The manufacturing cost is lower than in prior art technology which leads to an advantage on usability and competition in the industry.

### BRIEF DESCRIPTION OF THE DRAWINGS

Figure 1 is a top view of the structure of waterproof casing with multiple isolated compartments.
Figure 2 is a perspective exploded view showing a preferred embodiment of the present invention.
Figure 3 is a perspective exploded view showing another preferred embodiment of the present invention.
Figure 4 is a perspective view showing another preferred embodiment of the present invention.
Figure 5 is a perspective view showing another preferred embodiment of the present invention.

### DETAILED DESCRIPTION OF PREFERRED EMBODIMENTS

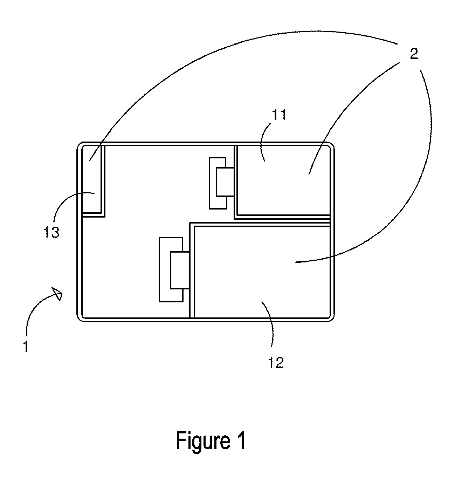

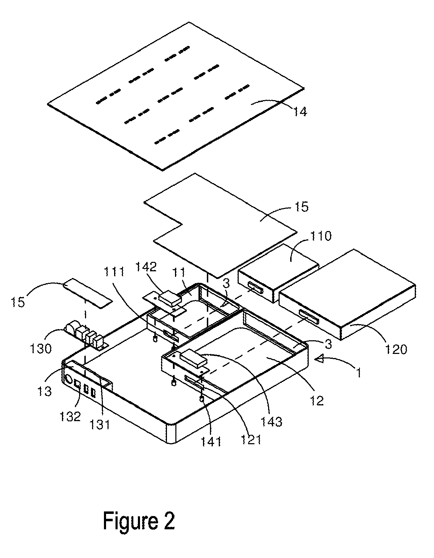

Refer to figures 1 and 2 show a top view and a perspective exploded view of the preferred embodiment of the present invention, respectively. As shown by Figures 1 and 2, the present invention relates to a structure of compartmental waterproof casing. The structure consists of a casing body 1, a mother board 14 with multiple isolated compartments 2. The isolated compartments 2 further consists of a hard disk drive compartment 11, an optical disk drive compartment 12 and an input/output ports compartment 13, in which a hard disk drive module 110, an optical disk drive module 120 and an input/output ports printed circuit board assembly 130 are installed, respectively. Openings 111 and 121 are provided at the side of the hard disk drive compartment and the side of the optical disk drive compartment, respectively. A hard disk drive adaptor 142 and an optical disk drive adaptor 143 are installed inside the casing body 1. A plurality of screws 141 and an input/output ports compartment opening 131 are installed on the mother board 14. A plurality of input/output ports through holes is provided on the casing body 1. As shown in the drawing, said hard disk drive module 110, optical disk drive module 120 and input/output ports printed circuit board assembly 130 are installed inside said hard disk drive compartment 11, optical disk drive compartment 12 and input/output ports compartment 13, respectively. For the purpose of protecting each and every electronic component individually, said each and every electronic component is contained in each individual compartment. The compartments are divided by compartment boards, which are formed of a single piece of material by design. The interior of said casing body 1 comprises said multiple compartments 2 and a space among said multiple compartments. Said space is in proximity to said multiple compartments 2 to connect said electronic components installed inside said compartments. The interior of said casing body 1 is a structure of multiple compartments. Said hard disk drive compartment opening 111 is provided to said hard disk drive compartment 11 between said hard disk drive compartment 11 and said mother board 14 for said hard disk drive module 110 to connect said mother board 14. Similar to said hard disk drive compartment 11, said optical disk drive compartment 12 and said input/output ports compartment 13 are provided with similar connection channels to said mother board 14 as well. Said optical disk drive compartment opening 121 is provided to said optical disk drive compartment 12 between said optical disk drive compartment 12 and said mother board 14 for said optical disk drive module 120 to connect said mother board 14. Said input/output ports compartment opening 131 is provided to said input/output ports compartment 13. On the other hand, a plurality of input/output ports plug holes 132 for external connection are provided to said casing body 1 at said compartment opening 131 are installed on the mother board 14. A plurality of input/output ports through holes are provided on said casing body 1 to said input/output ports compartment 13 for external connections. Said hard disk drive compartment opening 111 provided to said hard disk drive compartment 11 allows said electronic components inside said hard disk drive compartment 11 to connect said mother board 14 electrically through said hard disk drive adaptor 142. Said screws 141 fasten said hard disk drive adaptor board 142 to said mother board 14 by inserting through two sides of said adaptor board 142. Similarly, said optical disk drive compartment opening 121 provided to said optical disk drive compartment 12 allows said electronic components inside said optical disk drive compartment 12 to connect said mother board 14 electrically through said optical disk drive adaptor 143. Said screws 141 fasten said optical disk drive adaptor board 143 to said mother board 14 by inserting through two sides of said adaptor board 143. Hence, said mother board 14 can directly operate said hard disk drive module 110 and said optical disk drive module 120 through said hard disk drive adaptor board 142 and said optical disk drive adaptor board 143, that the computer device can work smoothly. Finally, said compartment dividing board 15 is installed above said hard disk drive compartment 11, said optical disk drive compartment 12 and said input/output ports compartment 13 to ensure that said hard disk drive compartment 11, said optical disk drive compartment 12 and said input/output ports compartment 13 constitute a tightly closed space isolated completely from the outside world.

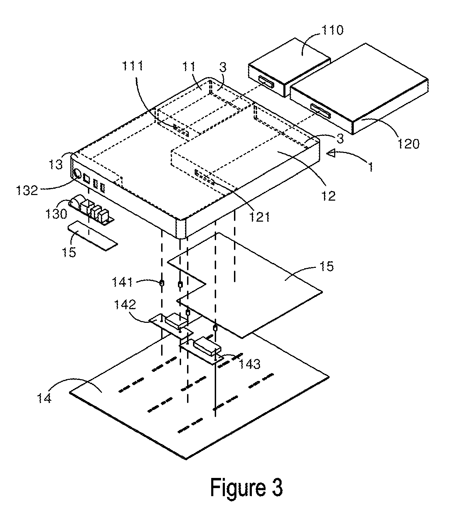

Figure 3 shows a perspective exploded view of a preferred embodiment of the present invention. It is another configuration of the embodiment shown in Figure 2. The differences between Figures 2 and 3 is that said dividing board 15 is installed under said hard disk drive compartment 11 and said optical disk drive compartment 12 and the upper side of said dividing board is said enclosed casing body 1 formed of a single piece material. The other embodiments are as described in the previous paragraph that won't be repeated hereby. In addition, the above description is only one embodiment of the present invention. Said dividing board 15 can be installed above said hard disk drive compartment 11 and said optical disk drive compartment 12 depending upon the requirements.

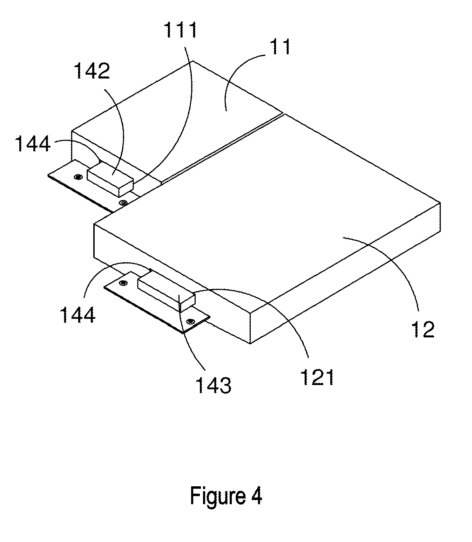

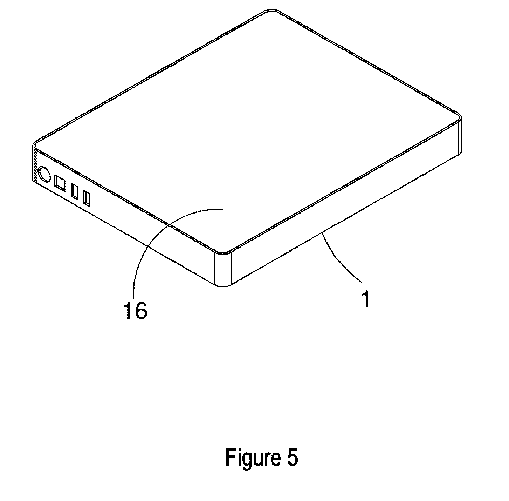

Figures 4 and 5 show the structure or assembly of a preferred embodiment of the present invention. As shown, the present invention relates to a structure of compartmental waterproof casing. Waterproof silicone caulking 144 is applied around said hard disk drive compartment opening 111 said optical disk drive compartment opening 121. A casing cover 16 covers said casing body 1. Said casing cover 16 has a "U" shape cross section. Said hard disk drive adaptor board 142 and said optical disk drive adaptor board 143 are connected to said electronic components through said hard disk drive compartment opening 111, said optical disk drive compartment opening 121 and said input/output ports compartment opening 131. In order to avoid gaps at the joints, waterproof silicone caulking 144 is applied to where said hard disk drive module 110 touching said hard disk drive adaptor board 142 and where said optical disk drive module 120 touching said optical disk drive adaptor board 143 to completely seal the gaps on the openings above said compartments 2. Finally said casing cover is placed outside said casing body 1 to completely prevent moisture or other foreign substance from flowing between said compartments and damaging the device.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A structure of compartmental waterproof casing comprising:
a casing body;
a mother board installed in a space inside said casing body; and
a plurality of compartments provided inside said casing body and in proximity to said mother board, said compartments being independent and isolated from each other and each and every said compartments constituting a closed space, on which side an opening leading to said space inside said casing body is provided, and at least one electronic device being installed in said compartments.

2. The structure of compartmental waterproof casing in accordance with claim 1, wherein said casing body is formed of a single piece material.

3. The structure of compartmental waterproof casing in accordance with claim 1, wherein said compartments comprise a hard disk drive compartment where is installed a hard disk drive module.

4. The structure of compartmental waterproof casing in accordance with claim 3, wherein a hard disk drive compartment opening is provided to said hard disk drive compartment between said mother board and said hard disk drive module.

5. The structure of compartmental waterproof casing in accordance with claim 4, wherein a hard disk drive adaptor board is provided between said mother board and said hard disk drive compartment opening.

6. The structure of compartmental waterproof casing in accordance with claim 5, wherein waterproof silicone caulking is applied to the gap between said hard disk drive adaptor board and said hard disk drive compartment opening.

7. The structure of compartmental waterproof casing in accordance with claim 1, wherein said compartments comprise an optical disk drive compartment where is installed an optical disk drive module.

8. The structure of compartmental waterproof casing in accordance with claim 7, wherein an optical disk drive compartment opening is provided to said optical disk drive compartment between said mother board and said optical disk drive module.

9. The structure of compartmental waterproof casing in accordance with claim 8, wherein an optical disk drive adaptor board is provided between said mother board and said optical disk drive compartment opening.

10. The structure of compartmental waterproof casing in accordance with claim 9, wherein waterproof silicone caulking is applied to the gap between said optical disk drive adaptor board and said optical disk drive compartment opening.

11. The structure of compartmental waterproof casing in accordance with claim 1, wherein said compartments comprise an input/output ports compartment.

12. The structure of compartmental waterproof casing in accordance with claim 11, wherein an input/output ports compartment opening is provided to said input/output ports compartment.

13. The structure of compartmental waterproof casing in accordance with claim 11, wherein a plurality of plug holes for external connections are provided to said casing body outside said input/output ports compartment.

14. The structure of compartmental waterproof casing in accordance with claim 1, wherein a compartment cover is installed under said hard disk drive compartment and said optical disk drive compartment.

15. The structure of compartmental waterproof casing in accordance with claim 1, wherein a casing cover is installed in contact to the outer side of said casing body.
